# EUROPEAN PATENT SPECIFICATION

(11) **EP 2 736 786 B1**
(45) Date of publication and mention of the grant of the patent: **02.05.2018**
(21) Application number: 12759222.8
(22) Date of filing: 20.07.2012
(51) Int. Cl.: B61D 15/06, B61G 11/16, F16F 7/12

(54) **COLLAPSIBLE ELEMENT FOR A RAILWAY VEHICLE LOCOMOTIVE**
KLAPPBARES ELEMENT FÜR EINE SCHIENENFAHRZEUGLOKOMOTIVE
ÉLÉMENT APLATISSABLE POUR LOCOMOTIVE DE VÉHICULE FERROVIAIRE

(30) Priority: 25.07.2011 IT TO20110670
(43) Date of publication of application: 04.06.2014
(73) Proprietor: HITACHI RAIL ITALY S.p.A., Napoli (IT)
(72) Inventor: LENZI, Luca, Cantagrillo 51034 (IT)
(74) Representative: Lovino, Paolo
(86) International application number: PCT/IB2012/053727
(87) International publication number: WO 2013/014593

(56) References cited:
- EP-A1- 2 011 713
- EP-A2- 1 746 007
- EP-A2- 1 873 036
- WO-A1-2011/012884
- WO-A2-2006/024059
- DE-A1-102007 005 421

## Description

### TECHNICAL FIELD

The present invention relates to a collapsible element for a locomotive of a railway vehicle.

### BACKGROUND ART

As known, the locomotive of railway vehicles have, at their ends, elements or structures responsible for absorbing energy in the event of a frontal impact. For example, using a pair of collapsible elements, which are mounted cantilevered to the end of the locomotive along respective horizontal axes parallel to the longitudinal direction of the vehicle, are arranged in transversely spaced positions to one another and, in general, comprise box-type bodies which carry, at one end, an anti-climber plate. The horizontal axes of the collapsible elements are at a height from the ground such that, in case of an accident, the anti-climber plates come into contact against corresponding anti-climber plates of the contacted wagon and prevent a relative sliding in the vertical direction to avoid a lifting of the wagons.

At the same time, the box-type bodies absorb kinetic energy by deforming, i.e. by converting said kinetic energy into plastic deformation energy, until the appropriate stop bumpers limit the deformation, or until the box-type bodies have reached their maximum compaction.

Practically, when the anti-climber plates come into contact with each other during a collision, the respective collapsible elements are never perfectly coaxial with each other, but there is an offset in the vertical direction. This offset generates an asymmetric breakdown of the load between the box-type bodies and a rotation of the anti-climber plate, for which the amount of total energy actually absorbed is less than that foreseen in planning.

To solve this drawback, the patent EP2011713, which corresponds to the preamble of claim 1, discloses a guide system having a series of vertical partitions, which are spaced along the longitudinal axis of the collapsible element and are axially drilled. The guide system has an axial stem, which is fixed to a rear face of the anti-climber plate and slidably engages a part of said partitions. During a frontal impact, the axial stem retracts and inserts into the remaining part of the partitions, which then guide the axial sliding of the stem, thereby preventing deformation of the axial stem and the rotations of the anti-climber plate.
The guide system just described is not appropriate in the case wherein the collapsible element is very long.
The patent EP-A2-1746007, in the embodiment of Figure 5, suggests the use of a tube to guide the axial sliding of the stem, but the latter has an excessive length. EP-A1-2011713 discloses a collapsible element according to the preamble of claim 1.

### DISCLOSURE OF INVENTION

The purpose of the present invention is to provide a collapsible element for a locomotive of a. railway vehicle, which allows to solve the above problems in a simple and economic way.
According to the present invention, a collapsible element for a locomotive of a railway vehicle is made, as defined in claim 1.

### BRIEF DESCRIPTION OF THE DRAWINGS

The invention will now be described with reference to the accompanying drawings, which illustrate an non-limiting example of embodiment, wherein:
- Figure 1 is a perspective view, with parts removed for clarity, of a locomotive of a railway vehicle having a preferred embodiment of the collapsible element according to the present invention;
- Figure 2 is a longitudinal section, on an enlarged scale, of the collapsible element of Figure 1;
- Figure 3 is a side view, in enlarged scale and with parts removed for clarity, of an intermediate step of plastic deformation of the collapsible element during a frontal collision;
- Figure 4 is similar to Figure 3 and illustrates a terminal step of the plastic deformation, and
- Figure 5 is similar to Figure 2 and illustrates a variation of the collapsible element of Figure 2.

### BEST MODE FOR CARRYING OUT THE INVENTION

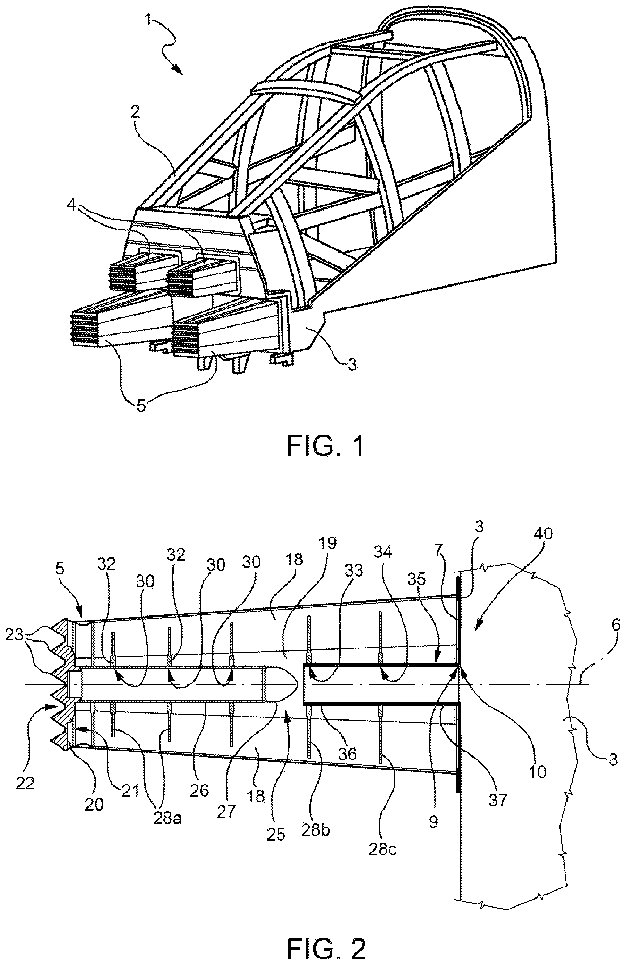

In figure 1, number 1 indicates as a whole, the locomotive of a railway vehicle (partially illustrated). The locomotive 1 comprises a frame 2, which frontally comprises a vertical head 3 that, in general, form a step so as to have two parts at different heights, horizontally spaced from one another. Said parts respectively support a pair of deformable upper elements 4 and a pair of lower deformable elements 5. The elements 4 and 5 are collapsible to absorb energy during frontal impact of the locomotive 1.

With reference to Figure 2, each element 5 extends cantilevered from the head 3 along an axis 6 substantially horizontal and parallel to the longitudinal direction of the locomotive 1 and has an overall truncated-pyramid shape which widens towards the head 3.

With reference to Figure 2, the element 5 terminates, at the rear, with a substantially vertical plate 7, which is fixed to the head 3 and has an aperture 9 aligned along the axis 6 with a corresponding aperture 10 of the head 3.

The element 5 further comprises four box-type or tubular bodies 18 (only two of which are visible), which are plastically deformable by compression, are arranged along the lateral edges of the element 5, have a quadrangular cross-section, and preferably have substantially a frustoconical shape that widens towards the head 3 to increase the energy absorbed with the increasing of the compression stroke along the axis 6.

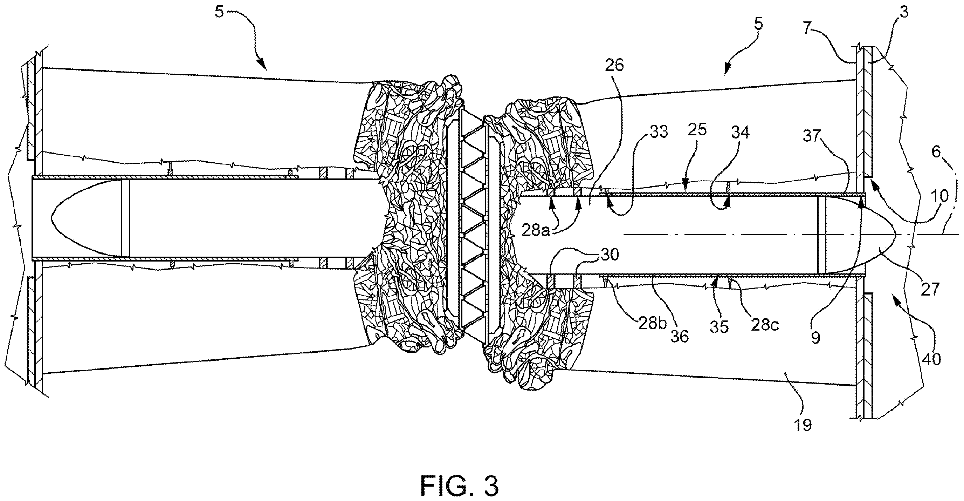

The element 5 also comprises a covering sheet 19 arranged along the four sides, so as to cover the bodies 18 towards the outside, and a vertical front plate 20, which has a rear face 21 fixed to the front ends of the bodies 18 and a front face 22 which leads in fixed positions, a plurality of ribs or horizontal teeth 23, or other equivalent devices, to perform an anti-climber function when the plate 20 comes into contact, during a frontal impact, with a corresponding anti-climber plate of another railway vehicle (Figure 3).

The dimensions, the mutual distance and the number of teeth 23 is such as to limit the possibility of reciprocal sliding in a vertical direction between the anti-climber plates.

The element 5 also comprises a guide device 25 to prevent rotation of the plate 20 during the plastic deformation of the bodies 18 in case of frontal impact, so that the plate 20 allocates the load uniformly on bodies 18, allowing the element 5 to operate correctly and to absorb the amount of energy foreseen in planning.

The device 25 comprises a stem 26, which is fixed to its own front end, to the face 21, for example by welding. The stem 26 extends along the axis 6 in a central space between the four bodies 18 and has an axial length less than that of bodies 18 (about 60%). In particular, the stem 26 is cylindrical tubular and supports at its own rear end an ogive head 27.

The device 25 further comprises a plurality of partitions, in particular five, which are housed in the deformable structure defined by the bodies 18 and the covering sheet 19, are fixed to the bodies 18 and/or the covering sheet 19, for example by welding, are orthogonal to the axis 6 and are axially spaced from one another.

In a first part of partitions, frontally arranged and indicated by reference number 28a, at the center are provided respective guide holes 30. The holes 30 are coaxial with the apertures 9 and 10 along the axis 6 and are engaged by the stem 26 in a sliding manner. The partitions 28a are preferably three, and have the function of guiding the axial retraction of the stem 26, and then to distribute the stresses transferred from the plate 20 on the bodies 18 in an evenly distributed manner, from the beginning of the impact of the locomotive and of the plastic deformation of the element 5.

Preferably, the partitions 28a have a thickening in a central annular area 32 surrounding the holes 30, so as to reinforce the area 32 with respect to the periphery of the partitions 28a. In particular, in each partition, one of the two faces is flat, while the other has a step which highlights the area 32.

Preferably, the edge of each hole 30 is defined by a collar (not shown), which is arranged on the inner circular edge of the area 32 and has a thickness less than that of the area 32, to limit the contact surface with the stem 26 and therefore reduce friction.

A second part of partitions, indicated by reference numbers 28b and 28c, are arranged at the rear and, at the center, have respective axial holes 33,34 traversed by a guide tube 35, which is coaxial to the stem 26. The partition 28b is the axially closest to the plate 20 and is the first to be engaged by the stem 26 during axial retraction. It is fixed to a front end portion 36 of the guide tube 35, for example by welding.

The guide tube 35 has an internal diameter slightly greater than that of the stem 26, i.e. a diameter substantially equal to that of the holes 30, and is sufficiently long to also engage the aperture 9 with its own rear end portion 37 when the element 5 is in the undeformed condition. Moreover, always in the undeformed condition, the portion 36 is not engaged by the head 27, in order to limit the length of the stem 26.

According to one aspect of the invention, the hole edge 33 is the only fixing area of the guide tube 35, which is then free to slide axially through the partition 28c (under the guide of the hole edge 34), through the plate 7 (under the guide of the aperture edge 9), and through the aperture 10 (with clearance).

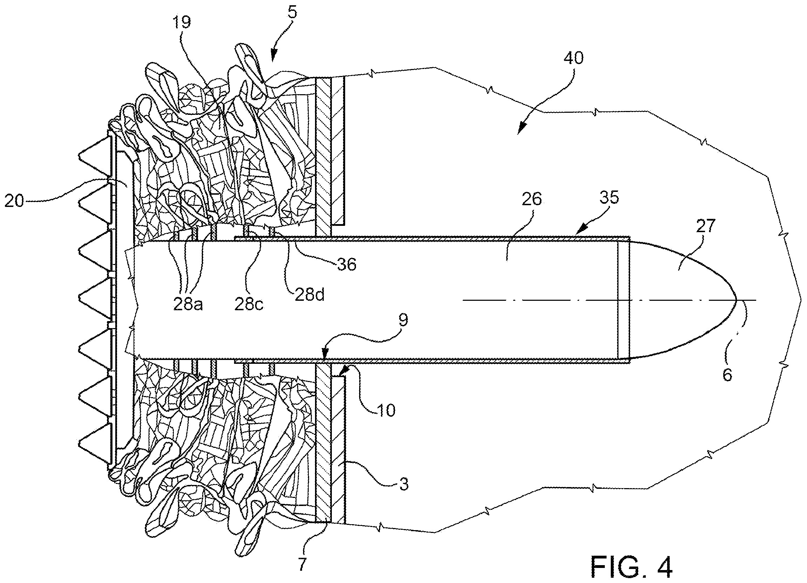

Figures 3 and 4 are simulations of an intermediate step and a final step of plastic deformation during a collision between two locomotives, each bearing, a respective pair of elements 5.

During the impact, in a progressive way, the element 5 is axially shortened and the head 27 of the stem 26 approaches the partitions 28b and 28c until it enters the portion 36 of the guide tube 35. The flared or ogive shape of the head 27 facilitates this insertion. At this point, the guide tube 35 cooperates with the holes 30 for guiding the stem 26, which continues to retract. In fact, the bodies 18 and the covering sheet 19 crumple from their front area: as shown in Figure 3, when the deformation reaches an intermediate region around the partition 28b, also the latter starts to deform and retract. Thanks to the fixing between the partition 28b and the guide tube 35, these two components retract together, under the guidance of the partition and 28c of the plate 7.

The aperture 10 defines the entrance to a space 40 which is made in the head 3 and is free to house the guide tube 35 during its axial retraction, with the stem 27 arranged within the guide tube 35. Figure 4 shows the element 5 completely collapsed at the end of a collision, with the space 40 which houses, in fact, the guide tube 35 and the rear part of the stem 26.

During the retraction, thanks to the guide exerted by the partitions 28a and by the guide tube 35, the stem 26 remains substantially horizontal and the four bodies 18 crumple to each other in a substantially uniform way. In other words, at the end of the impact, the stem 26 has a slight inclination with respect to axis 6. Therefore, the operation of the plate 20 is optimal, since there is no significant lifting of the locomotives and phenomena of climb or overlap, and the risk of derailment is extremely reduced.

The sliding friction of the stem 26 in the partitions 28a and in the guide tube 35, and that of the guide tube 35 in the partition 28c and in the plate 7, is relatively low, so that it generates slight reactions along the axis 6. Also, the tapered shape of the head 27 tends to avoid strong impacts against the edge of the axial portion 36.

The larger amount of energy (about 70%) is dissipated by the deformation of bodies 18. The remaining part is dissipated by the covering sheet 19 and the weld beads. Regarding the head 3, it is a substantially rigid structural element that does have an energy dissipation function, but guarantees the support and the connection of the elements 5.

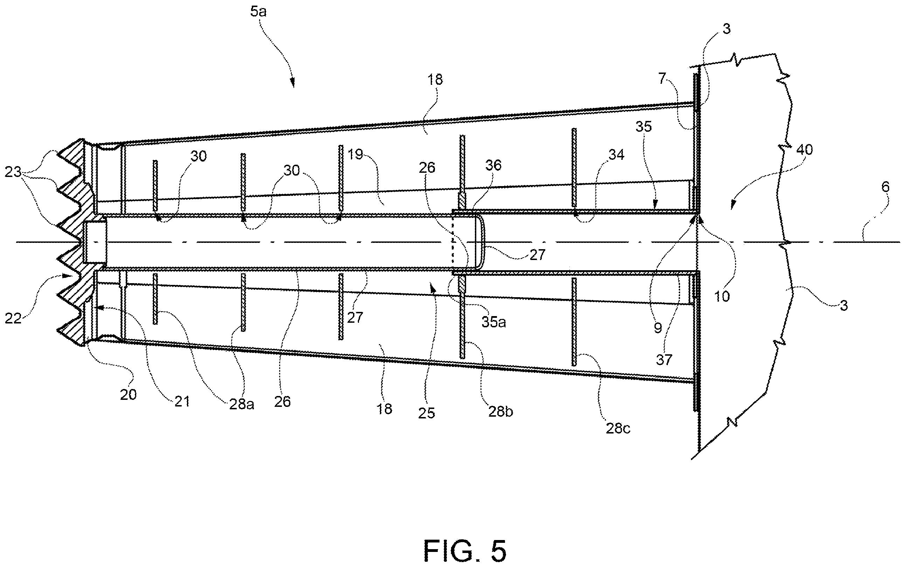

Figure 5 shows an element 5a, whose constituent parts are indicated, where possible, by the same reference numbers used for the element 5 of Figure 2.

Unlike the element 5, in the element 5a the thickening of the areas 32 is absent.

In addition, a relatively small radial clearance (shown out of scale in figure 5) is provided between the edges of the holes 30 and the outer side surface of the stem 26, and/or between the edge of the hole 34 and the outer side surface of the guide tube 35 in order to further reduce the friction during the first instants of the plastic deformation and axial retraction of the stem 26 and/or of the guide tube 35.

According to a preferred aspect of the present invention, in the undeformed condition of the element 5a, the stem 26 has a rear axial end 26a which engages an axial end 35a of the front guide tube 35, in order to prevent a possible jamming of the stem 26 during the insertion in the guide tube 35.

At this point, it is not necessary that the head 27 has an ogival shape: in fact, the head 27 is simply defined by a cap having a flat surface joined to the axial rear end 26a of the stem 26.

Preferably, in the undeformed condition the rear axial end 26a engages the portion 36 where the edge of the hole 33 is fixed.

Finally, the portion 37 is fixed to the plate 7 by means of frangible areas, in particular by welding points, for maintaining stable the position of the guide tube 35 when the element 5a is not deformed, i.e. in the normal running conditions of the locomotive: those fixing areas have a resistance low enough to break when the guide tube 35 is axially pushed back during the plastic deformation of the element 5a, in particular when the deformation reaches the intermediate area around the partition 28b.

From the foregoing it is evident that the presence of the guide tube 35 allows to have a relatively long element 5,5a, but with a relatively short stem 26, whereby the space 40 may have small dimensions, without spaces or additional dimension behind the head 3.

In addition, the guide tube 35 tends to stiffen the rear area of the element 5,5a, between the partitions 28b and 28c, without creating additional external dimensions, whereby it contributes effectively to prevent contortion of the element 5,5a during compression.

Given the reduced dimensions in the transverse direction, the element 5,5a can also be installed on locomotives already operative to replace less effective absorbers.

From the above it is finally clear that the element 5,5a described can be subject to modifications and variants which do not depart from the scope of protection of the present invention.

In particular, the tubular bodies 18 may have shape and/or dimensions different from those indicated, and/or the elements 5,5a may be connected to support structures other than the head 3.

## Claims

1. A collapsible element (5;5a) for a locomotive (1) of a railway vehicle; the collapsible element comprising:
- an absorption structure extending along a substantially horizontal axis (6), plastically deformable to absorb energy, and having a rear end connectable to a support (3) and a front end supporting an anti-climber plate (20);
- a guide device (25) comprising:
a) a stem (26), which is fixed to a rear face of said anti-climber plate (20) and extends along said axis (6) inside said absorption structure;
b) a plurality of front partitions (28a), which are orthogonal to said axis (6), are axially spaced from one another, are fixed to said absorption structure and have, at the center, respective guide holes (30) engaged in an axially sliding manner by said stem (26);
c) a rear partition (28b), which is orthogonal to said axis (6), is axially spaced from said front partitions (28a), is housed in said absorption structure, is fixed to said absorption structure and has, at the center, a first hole (33) coaxial with said guide holes (30) along said axis (6);
d) a rear guide means (28c,7), which is axially spaced from said rear partition (28b), is fixed with respect to said absorption structure, has a second hole (34, 9) coaxial with said guide holes (30) and with said first hole (33) and is axially more spaced from said anti-climber plate (20) than said rear partition (28b);
**characterized in that** the said guide device (25) also comprises a guide tube (35), which is coaxial with the said stem (26) and with said guide holes (30), engages said first (33) and second (34,9) hole, and has an internal diameter substantially equal to that of said guide holes (30), in such a manner as to guide an axial retraction of said stem (26) during a plastic deformation of said absorption structure; said guide tube (35) being stably fixed to said rear partition (28b), so as to be movable together with said rear partition (28b), and being axially slidable in said second hole (34,9) during a part of said plastic deformation.

2. The collapsible element according to claim 1, **characterized in that** said rear guide means comprises a further rear partition (28c), which is housed in said absorption structure and has a second hole (34) engaged by an intermediate portion of said guide tube (35).

3. The collapsible element according to claim 1 or 2, **characterized in that** said rear guide means comprises a substantially vertical plate (7), which is fixed to the rear end of said absorption structure and has a second hole (9) engaged by a rear end portion (37) of said guide tube (35).

4. The collapsible element according to claim 3, **characterized in that** it comprises frangible connection means, which fix said rear end portion (37) to said substantially vertical plate (7) and are adapted to break in case of axial retraction of said guide tube (35).

5. The collapsible element according to any of the preceding claims, **characterized in that** said stem (26) has a rear axial end (26a), which engages a front axial end (35a) of said guide tube (35) when the collapsible element (5a) is not deformed.

6. The collapsible element according to any of the preceding claims, **characterized in that** said absorption structure comprises four tubular bodies (18) arranged at respective edges of the collapsible element (5; 5a); said partitions being welded to said tubular bodies (18).

7. The collapsible element according to claim 6, **characterized in that** said absorption structure comprises a covering (19) arranged around said tubular bodies (18) along the four sides of the collapsible element (5; 5a); said partitions being also welded to the said covering (19).

## Patentansprüche

1. Klappbares Element (5; 5a) für eine Lokomotive (1) eines Schienenfahrzeugs, wobei das klappbare Element Folgendes umfasst:
- eine Absorptionsstruktur, die sich entlang einer im Wesentlichen horizontalen Achse (6) erstreckt, die plastisch verformbar ist, um Energie zu absorbieren, und die ein hinteres Ende aufweist, das mit einem Träger (3) verbindbar ist, und ein vorderes Ende, das eine Aufkletterschutzplatte (20) trägt;
- eine Führungseinrichtung (25), umfassend:
a) einen Stamm (26), der an einer Rückseite der Aufkletterschutzplatte (20) befestigt ist und sich entlang der Achse (6) innerhalb der Absorptionsstruktur erstreckt;
b) eine Mehrzahl von vorderen Trennwänden (28a), die rechtwinklig zu der Achse (6) angeordnet sind, axial voneinander getrennt sind, an der Absorptionsstruktur befestigt sind und in der Mitte entsprechende Führungslöcher (30) aufweisen, die axial gleitend durch den Stamm (26) in Eingriff stehen;
c) eine hintere Trennwand (28b), die rechtwinklig zu der Achse (6) ist, axial von den vorderen Trennwänden (28a) beabstandet ist, in der Absorptionsstruktur untergebracht ist, an der Absorptionsstruktur befestigt ist und in der Mitte ein erstes Loch (33) aufweist, das zu den Führungslöchern (30) entlang der Achse (6) koaxial ist;
d) eine hintere Führungseinrichtung (28c, 7), die axial von der hinteren Trennwand (28b) beabstandet ist, in Bezug auf die Absorptionsstruktur fixiert ist, ein zweites Loch (34, 9) aufweist, das koaxial zu den Führungslöchern (30) und zu dem ersten Loch (33) ist und axial mehr Abstand von der Aufkletterschutzplatte (20) hat als die hintere Trennwand (28b);
**dadurch gekennzeichnet, dass** die Führungseinrichtung (25) auch ein Führungsrohr (35) umfasst, das koaxial zum Stamm (26) und zu den Führungslöchern (30) ist, in das erste (33) und zweite (34, 9) Loch eingreift und einen Innendurchmesser aufweist, der im Wesentlichen gleich dem der Führungslöcher (30) ist, in einer solchen Weise, um einen axialen Rückzug des Stammes (26) während einer plastischen Verformung der Absorptionsstruktur zu führen; wobei das Führungsrohr (35) in stabiler Weise an der hinteren Trennwand (28b) befestigt ist, um auf diese Weise zusammen mit der hinteren Trennwand (28b) bewegbar zu sein, und während eines Teils der plastischen Verformung axial in dem zweiten Loch (34, 9) gleitbar ist.

2. Klappbares Element nach Anspruch 1, **dadurch gekennzeichnet, dass** die hintere Führungseinrichtung eine weitere hintere Trennwand (28c) umfasst, die in der Absorptionsstruktur untergebracht ist und ein zweites Loch (34) aufweist, das durch einen Zwischenabschnitt des Führungsrohrs (35) in Eingriff gebracht ist.

3. Klappbares Element nach Anspruch 1 oder 2, **dadurch gekennzeichnet, dass** die hintere Führungseinrichtung eine im Wesentlichen vertikale Platte (7) umfasst, die am hinteren Ende der Absorptionsstruktur befestigt ist und ein zweites Loch (9) aufweist, das durch einen hinteren Endabschnitt (37) des Führungsrohrs (35) in Eingriff gebracht ist.

4. Klappbares Element nach Anspruch 3, **dadurch gekennzeichnet, dass** es zerbrechliche Verbindungsmittel aufweist, die den hinteren Endabschnitt (37) an der im wesentlichen vertikalen Platte (7) befestigen und so ausgebildet sind, dass sie im Falle eines axialen Rückzugs des Führungsrohrs (35) brechen.

5. Klappbares Element nach einem der vorangehenden Ansprüche, **dadurch gekennzeichnet, dass** der Stamm (26) ein hinteres axiales Ende (26a) aufweist, das in ein vorderes axiales Ende (35a) des Führungsrohrs (35) eingreift, wenn das klappbare Element (5a) nicht verformt ist.

6. Klappbares Element nach einem der vorangehenden Ansprüche, **dadurch gekennzeichnet, dass** die Absorptionsstruktur vier rohrförmige Körper (18) umfasst, die an den jeweiligen Kanten des klappbaren Elements (5; 5a) angeordnet sind; wobei die Trennwände mit den rohrförmigen Körpern (18) verschweißt sind.

7. Klappbares Element nach Anspruch 6, **dadurch gekennzeichnet, dass** die Absorptionsstruktur eine Abdeckung (19) umfasst, die um die rohrförmigen Körper (18) herum entlang der vier Seiten des klappbaren Elements (5; 5a) angeordnet ist; wobei die Trennwände auch mit der Abdeckung (19) verschweißt sind.

## Revendications

1. Elément pliant (5 ; 5a) destiné à une locomotive (1) d'un véhicule ferroviaire ; l'élément pliant comprenant :
- une structure d'absorption qui s'étend le long d'un axe (6) sensiblement horizontal, qui est déformable plastiquement pour absorber l'énergie et ayant une extrémité arrière pouvant être reliée à un support (3) et une extrémité avant supportant une plaque anti-chevauchement (20) ;
- un dispositif de guidage (25) comprenant :
a) une tige (26) qui est fixée à une face arrière de ladite plaque anti-chevauchement (20) et qui s'étend le long dudit axe (6) à l'intérieur de ladite structure d'absorption ;
b) une pluralité de cloisons avant (28a) qui sont orthogonales audit axe (6), qui sont espacées axialement l'une de l'autre, qui sont fixées à ladite structure d'absorption et qui ont, au centre, des trous de guidage respectifs (30) dans lesquels ladite tige (26) s'engage suivant un coulissement axial ;
c) une cloison arrière (28b) qui est orthogonale audit axe (6), qui est espacée axialement desdites cloisons avant (28a), qui est logée dans ladite structure d'absorption, qui est fixée à ladite structure d'absorption et qui a, au centre, un premier trou (33) coaxial auxdits trous de guidage (30) le long dudit axe (6) ;
d) un moyen de guidage arrière (28c, 7) qui est espacé axialement de ladite cloison arrière (28b), qui est fixé par rapport à ladite structure d'absorption, qui a un deuxième trou (34, 9) coaxial auxdits trous de guidage (30) et audit premier trou (33) et qui est davantage espacé axialement de ladite plaque anti-chevauchement (20) que ladite cloison arrière (28b) ;
**caractérisé en ce que** ledit dispositif de guidage (25) comprend également un tube de guidage (35) qui est coaxial à ladite tige (26) et auxdits trous de guidage (30), qui s'engage dans lesdits premier (33) et second (34,9) trous, et qui a un diamètre interne sensiblement égal à celui desdits trous de guidage (30), de manière à guider une rétraction axiale de ladite tige (26) lors d'une déformation plastique de ladite structure d'absorption ; ledit tube de guidage (35) étant fixé de manière stable à ladite cloison arrière (28b), de manière à pouvoir être déplacé conjointement avec ladite cloison arrière (26b), et pouvant coulisser axialement dans ledit deuxième trou (34,9) pendant une partie de ladite déformation plastique.

2. Elément pliant selon la revendication 1, **caractérisé en ce que** ledit moyen de guidage arrière comprend une autre cloison arrière (28c) qui est logée dans ladite structure d'absorption et qui a un deuxième trou (34) dans lequel s'engage une partie intermédiaire dudit tube de guidage (35).

3. Elément pliant selon la revendication 1 ou 2, **caractérisé en ce que** ledit moyen de guidage arrière comprend une plaque sensiblement verticale (7) qui est fixée à l'extrémité arrière de ladite structure d'absorption et qui a un deuxième trou (9) dans lequel s'engage une partie d'extrémité arrière (37) dudit tube de guidage (35).

4. Elément pliant selon la revendication 3, **caractérisé en ce qu'**il comprend des moyens de raccordement fragiles, qui fixent ladite partie d'extrémité arrière (37) à ladite plaque sensiblement verticale (7) et qui sont aptes à se rompre en cas de rétraction axiale dudit tube de guidage (35).

5. Elément pliant selon l'une quelconque des revendications précédentes, **caractérisé en ce que** ladite tige (26) a une extrémité axiale arrière (26a) qui s'engage avec une extrémité axiale avant (35a) dudit tube de guidage (35) lorsque l'élément pliant (5a) n'est pas déformé.

6. Elément pliant selon l'une quelconque des revendications précédentes, **caractérisé en ce que** ladite structure d'absorption comprend quatre corps tubulaires (18) disposés au niveau de bords respectifs de l'élément pliant (5 ; 5a) ; lesdites cloisons étant soudées auxdits corps tubulaires (18) .

7. Elément pliant selon la revendication 6, **caractérisé en ce que** ladite structure d'absorption comprend un revêtement (19) disposé autour desdits corps tubulaires (18) le long des quatre côtés de l'élément pliant (5 ; 5a) ; lesdites cloisons étant également soudées audit revêtement (19).
